# EUROPEAN PATENT APPLICATION

(11) **EP 3 778 149 A1**
(43) Date of publication of application: **17.02.2021**
(21) Application number: 19782249.7
(22) Date of filing: 05.04.2019
(51) Int. Cl.: B25J 11/00, B25J 9/16, B25J 19/00, A01D 34/00

(54) **MOBILE ROBOT AND MOBILE ROBOT SYSTEM**

(30) Priority: 06.04.2018 US 201862653567 P
(71) Applicant: LG Electronics Inc., Yeongdeungpo-gu Seoul 07336 (KR)
(72) Inventor: LEE, Jaehoon, Seoul 08592 (KR); CHOI, Kyuchun, Seoul 08592 (KR); WOO, Jongjin, Seoul 08592 (KR); KIM, Dongseong, Seoul 08592 (KR); KIM, Hyungsub, Seoul 08592 (KR); SHIN, Seungin, Seoul 08592 (KR); YU, Kyungman, Seoul 08592 (KR); JEONG, Jaehoon, Seoul 08592 (KR); NAM, Dongkyun, Seoul 08592 (KR)
(74) Representative: Ter Meer Steinmeister & Partner
(86) International application number: PCT/KR2019/004046
(87) International publication number: WO 2019/194625

(57) **Abstract**

The present disclosure provides a moving robot including: a body which forms an appearance, a traveler which moves the body, a boundary signal detector which detects a boundary signal generated in a boundary area of a traveling area, and a controller which controls pattern traveling in the traveler, reads the boundary signal during the pattern traveling to determine whether or not a situation is a traveling impossible situation, and searches for whether or not there is a non-traveling area according to a determination result to control the traveler. Accordingly, when an abnormal termination situation occurs while pattern traveling is performed, the abnormal termination situation is determined to perform continuous traveling, and thus, a continuous lawn mowing control can be provided with respect to one target area.

## Description

### BACKGROUND OF THE DISCLOSURE

### Field of the disclosure

The present disclosure relates to a moving robot and a moving robot system which can prevent an abnormal completion of pattern traveling of the moving robot.

### Related Art

A robot has been developed for industrial use and has been responsible for a portion of factory automation. In recent years, a field of application of the robot has been further expanded, a medical robot, an aerospace robot, or the like has been developed, and a home robot that can be used in a general home is also manufactured. Among these robots, a robot capable of traveling by itself is called a moving robot. A typical example of the moving robot used in an outdoor environment of a home is a lawn mowing robot.

In a case of a moving robot autonomously traveling indoors, a movable area is limited by a wall or furniture, but in a case of a mobile robot autonomously traveling outdoors, there is a need to set a movable area in advance. In addition, there is a need to limit the movable area so that the lawn mowing robot travels in an area where grass is planted.

In the related art (Korean Patent Publication Laid-Open No. 2015-0125508), a wire is buried to set an area in which a lawn mower robot is to be moved, and the lawn mower robot senses a magnetic field formed by a current flowing through the wire and can move within an area set by the wire.

In addition, according to the related art (United State Patent Publication No. US71553090), a technology of checking a boundary with respect to a traveling area or an area of an obstacle or the like by a marker such as a wire, and thus, performing the pattern traveling is disclosed.

However, in the related art (United State Patent Publication No. US7155309), both a navigation system and a sensor system must be provided in order to continuously check location information on a position of a current robot in a scanned traveling area in the pattern traveling.

When the robot does not include the navigation system, information on a current traveling location of the robot cannot be known, and even if the navigation system is provided, an error of absolute location information received from GPS or the like very largely affects the current traveling location of the robot within a narrow space.

In particular, in absence of the navigation system, in a case where the robot meets a shape on which the traveling cannot performed during the pattern traveling, if an end condition of the pattern traveling is satisfied, it is determined that the pattern traveling ends, and thus, lawn mowing is stopped.

As in the related art, when the lawn moving is stopped in a state where the pattern traveling of the lawn mower robot is not completely stopped, a non-traveling area occurs in which the lawn is not mowed in a state where power of the battery remains. In this case, there is a problem in that a user should newly design a starting point or newly perform the lawn mowing from an uncompleted point by resetting the lawn mower robot. In addition, one area is mowed a plurality of times, and the other area is mowed less than the one area, and thus, the mowed lawn within an area is not uniform and an error occurs.

In addition, there is a problem in that the lawnmower repeatedly travels over an area larger than the total area, and thus, the battery life is shortened.

### SUMMARY

A first task of the present disclosure is to determine an abnormal termination situation when the abnormal termination situation occurs during pattern traveling so as to perform continuous traveling.

A second task of the present disclosure is to perform an operation of finding a non-traveling area without absolute location information with respect to a current location when the abnormal termination situation is determined, and to continuously perform lawn moving in the non-traveling area when the non-traveling area is found.

A third task of the present disclosure is to determine whether or not the situation is the abnormal termination situation when a traveling completion condition is satisfied in an area smaller than one area divided during traveling of a lawn mower robot, so as to prevent a determination error according to a structure condition with respect to the area smaller than the divided area.

A fourth task of the present disclosure is to provide a control method of a lawn mower robot effective for battery maintenance by continuously performing lawn moving so that the non-traveling area does not occur in an area to be mowed.

A fifth task of the present disclosure is to provide uniform lawn mowing regardless of a structure condition of an area by uniformly performing lawn mowing on a preset target area.

According to an aspect of the present disclosure, there is provided a moving robot including: a body which forms an appearance; a traveler which moves the body; a boundary signal detector which detects a boundary signal generated in a boundary area of a traveling area; and a controller which controls pattern traveling in the traveler, reads the boundary signal during the pattern traveling to determine whether or not a situation is a traveling impossible situation, and searches for whether or not there is a non-traveling area according to a determination result to control the traveler.

The controller may control the traveler so that the moving robot performs pattern traveling in a zigzag mode in which the moving robot alternately travels a major axis and a minor axis.

The controller may determine whether or not a length of the major axis is reduced to set the length of the major axis to a reduced length, and determine whether or not a situation is the traveling impossible situation at a vertex while the pattern traveling is performed along the set major axis.

The controller may determine the traveling impossible situation by determining there is a non-traveling minor axis at the vertex or determining there is a non-traveling major axis at the vertex.

The controller determines the traveling impossible situation according to whether or not there is an obstacle and whether or not there is an island at the vertex.

When the situation is determined as the traveling impossible situation, the controller may search for whether or not there is the non-traveling area following the boundary area from the vertex.

The boundary area may be defined by a boundary wire which is disposed in the boundary area of the traveling area.

When the moving robot follows the boundary area, the controller may determine whether or not a new major axis is detected while following the boundary wire of the area which has already been traveled from the vertex.

The controller may set a length of a major axis of a pattern according to a length of the new detected major axis, and perform pattern traveling of the non-traveling area.

The controller may divide a traveling area into a first traveling area and a second traveling area and travel the second traveling area after traveling the first traveling area.

The first traveling area or the second traveling area may include a depression or a protrusion so that the major axis is changed.

In addition, according to another aspect of the present disclosure, there is provided a moving robot system including: a boundary wire which defines a traveling area; and a moving robot which includes a body which forms an appearance, a traveler which moves the body, a boundary signal detector which detects a boundary signal generated in a boundary area of a traveling area, and a controller which controls pattern traveling in the traveler, reads the boundary signal during the pattern traveling to determine whether or not a situation is a traveling impossible situation, and searches for whether or not there is a non-traveling area according to a determination result to control the traveler, in which when there is the non-traveling area, the controller controls the traveler so that the moving robot continues to travel the non-traveling area.

The controller may control the traveler so that the moving robot performs pattern traveling in a zigzag mode in which the moving robot alternately travels a major axis and a minor axis.

The controller may determine whether or not a length of the major axis is reduced to set the length of the major axis to a reduced length, and determine whether or not a situation is the traveling impossible situation at a vertex while the pattern traveling is performed along the set major axis.

The controller determines the traveling impossible situation by determining there is a non-traveling minor axis at the vertex or determining there is a non-traveling major axis at the vertex.

The controller may continuously perform traveling in the non-traveling area at the vertex.

The controller may move following the boundary wire from the vertex to the non-traveling area.

The moving robot system may further include a docking device to which the moving robot is docked to be charged, in which one end of the boundary area may be disposed to be adjacent to the docking device.

The docking device may further include a fist wire terminal and a second wire terminal which are connected to a power source, and one end of the boundary wire may be connected to the first wire terminal and the other end of the boundary wire is connected to the second wire terminal.

### ADVANTAGEOUS EFFECTS

According to the aspects of the present disclosure, it is possible to determine the abnormal termination situation when the abnormal termination situation occurs during pattern traveling so as to perform continuous traveling, and thus, a continuous lawn mowing control can be provided.

According to the aspects of the present disclosure, it is possible to perform an operation of finding a non-traveling area without receiving absolute location information through GPS or the like when the abnormal termination situation is determined, and to continuously perform lawn moving in the non-traveling area when the non-traveling area is found so that the lawn mowing is performed without the non-raveling area within the set area.

Moreover, the aspects of the present disclosure, it is possible to determine whether or not the situation is the abnormal termination situation when a traveling completion condition is satisfied in an area smaller than one area divided during traveling of a lawn mower robot, so as to prevent a determination error according to a structure condition with respect to an abnormal area having an area smaller than the divided area, and thus, it is possible to improve traveling correction.

According to the aspects of the present disclosure, it is possible to continuously performing lawn moving so that the non-traveling area does not occur in a target area to be mowed, stopping the lawn mower robot during the lawn mowing or resetting by a user is not required, and thus, maintenance of a battery is effectively performed.

Moreover, according to the aspects of the present disclosure, it is possible to provide the lawn mower robot capable of performing uniform lawn mowing regardless of a structure condition of an area by uniformly performing lawn mowing on a preset target area.

### BRIEF DESCRIPTION OF THE DRAWINGS

FIG. 1 is a perspective view of a moving robot of an embodiment of the present disclosure.
FIG. 2 is an elevational view when viewing a front surface of the moving robot 100 of FIG. 1.
FIG. 3 is an elevational view when viewing a right surface of the moving robot 100 of FIG. 1.
FIG. 4 is an elevational view when viewing a bottom surface of the moving robot 100 of FIG. 1.
FIG. 5 is a perspective view of a docking device 200 which docks the moving robot 100 of FIG. 1.
FIG. 6 is an elevational view when the docking device 200 of FIG. 5 is viewed from the front.
FIG. 7a is a view when a reference wire of an embodiment of the present disclosure is viewed from the rear.
FIG. 7b is a view when the reference wire according to the embodiment of the present disclosure is viewed from one side.
FIG. 8 is a block diagram illustrating a control relationship of the moving robot 100 of FIG. 1.
FIG. 9 is a view illustrating a moving robot system of an embodiment of the present disclosure.
FIG. 10 is a view illustrating a non-traveling area according a traveling path of the moving robot.
FIG. 11 is a flowchart of a control method of the moving robot of an embodiment of the preset disclosure.
FIG. 12 is a view illustrating the traveling path of the moving robot of the control method of a moving robot illustrated in FIG. 11.
FIG. 13 is a view of a moving robot system of another embodiment of the present disclosure.

### DESCRIPTION OF EXEMPLARY EMBODIMENTS

Expressions referring to directions such as "front(F) / rear(R) / left(Le) / right(Ri) / up (U) / down (D)" mentioned below are defined as indicated in the drawings. However, the expressions are only to explain the present disclosure so that the present disclosure can be clearly understood, and the directions may be differently defined depending on a criterion.

Use of terms "first and second" in front of components mentioned below is only to avoid confusion of the referred component, and is independent of an order, importance, or master/slave relationship between the components. For example, an invention including only a second component without a first component can be implemented.

In the drawings, a thickness or a size of each component is exaggerated, omitted, or schematically illustrated for convenience and clarity of the explanation. The size and area of each component do not entirely reflect the actual size or area.

Moreover, an angle and a direction mentioned in describing a structure of the present disclosure are based on those described in the drawings. In description of a structure in the specification, if a reference point and a positional relationship with respect to the angle are not explicitly mentioned, reference is made to the related drawings.

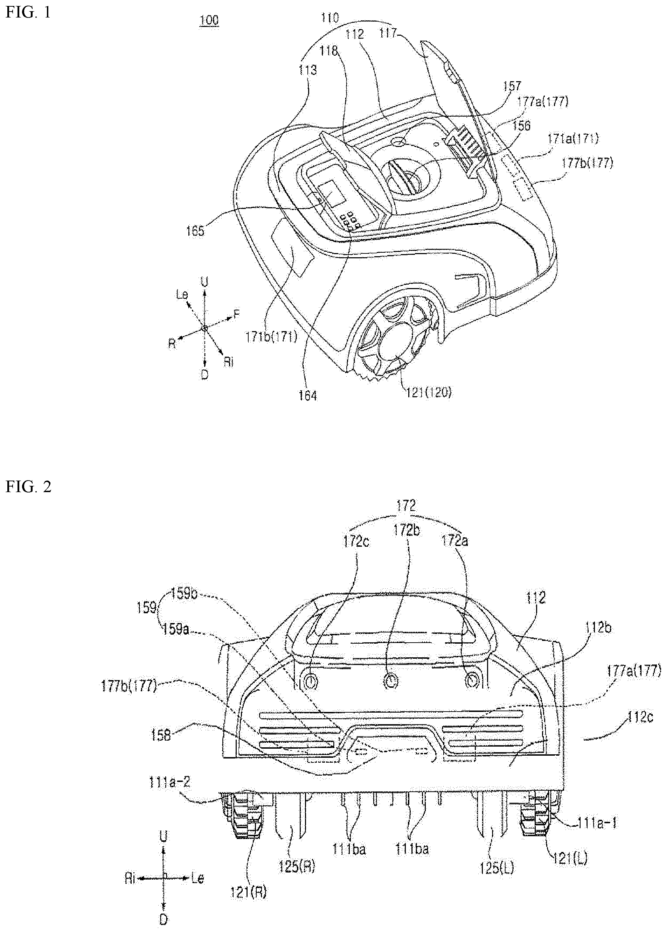

Hereinafter, a lawn mowing robot 100 of moving robots will be described as an example with reference to FIGS. 1 to 6, but the present disclosure is not limited thereto.

Referring to FIGS. 1 to 4, the moving robot 100 includes a body 110 which forms an appearance. The body 110 forms an interior space. The moving robot 100 includes a traveler 120 which moves the body 110 with respect to a traveling surface. The moving robot 100 includes an operator 130 which performs a predetermined work.

The body 110 includes a frame 111 to which the driving motor module 123 to be described later is fixed. A blade motor 132 to be described later is fixed to the frame 111. The frame 111 supports a battery to be described later. The frame 111 provides a skeleton structure which supports various other parts. The frame 111 is supported by an auxiliary wheel 125 and a driving wheel 121.

The body 110 includes a side blocking portion 111a for preventing a finger of a user from entering a blade 131 from both sides of the blade 131. The side blocking portion 111a is fixed to the frame 111. The side blocking portion 111a is disposed to protrude downward compared to a bottom surface of the other portion of the frame 111. The side blocking portion 111a is disposed to cover an upper portion of a space between the driving wheel 121 and the auxiliary wheel 125.

A pair of side blocking portions 111a-1 and 111a-2 are disposed right and left with the blade 131 therebetween. The side blocking portion 111a is disposed to be spaced apart at a predetermined distance from the blade 131.

A front surface 111af of the side blocking portion 111a is formed to be round. The front surface 111af forms a surface which is bent upward to be rounded forward from a bottom surface of the side blocking portion 111a. By using the shape of the front surface 111af, when the moving robot 100 moves forward, the side blocking portion 111a can easily ride over a lower obstacle below a predetermined reference.

The body 110 includes a front blocking portion 111b for preventing the finger of the user from entering the blade 131 in front of the blade 131. The front blocking portion 111b is fixed to the frame 111. The front blocking portion 111b is disposed to cover a portion of an upper portion of a space between the pair of auxiliary wheels 125L and 125R.

The front blocking portion 111b includes a protruding rib 111ba protruding downward compared to a bottom surface of the other portion of the frame 111. The protruding rib 111ba extends in a front-rear direction. An upper end portion of the protruding rib 111ba is fixed to the frame 111, and a lower end portion of the protruding rib 111ba forms a free end.

A plurality of protruding ribs 111ba may be spaced apart in a right-left direction. The plurality of protruding ribs 111ba may be disposed parallel to each other. A gap is formed between two adjacent protruding ribs 111ba.

A front surface of the protruding rib 111ba is formed to be round. The front surface of the protruding rib 111ba forms a surface which is bent upward to be rounded forward from a bottom surface of the protruding rib 111ba. By using the shape of the front surface of the protruding rib 111ba, when the moving robot 100 moves forward, the protruding rib 111ba 111a can easily ride over a lower obstacle below a predetermined reference.

The front blocking portion 111b includes an auxiliary rib 111bb to assist stiffness. The auxiliary rib 111bb for reinforcing stiffness of the front blocking portion 111b is disposed between upper end portions of the two adjacent protruding ribs 111ba. The auxiliary rib 111bb may be formed to protrude downward and extend in a lattice shape.

A caster (not illustrated) for rotatably supporting the auxiliary wheel 125 is disposed on the frame 111. The caster is rotatably disposed with respect to the frame 111. The caster is rotatably provided about a vertical axis. The caster is disposed below the frame 111. A pair of casters corresponding to the pair of auxiliary wheels 125 is provided.

The body 110 includes a case 112 which covers the frame 111 from above. The case 112 forms an upper surface and front/rear/left/right surfaces of the moving robot 100.

The body 110 may include a case connector (not illustrated) which fixes the case 112 to the frame 111. The case 112 may be fixed to an upper end of the case connector. The case connector may be disposed to be movable in the frame 111. The case connector may be disposed to be movable only in an up-down direction with respect to the frame 111. The case connector may be provided to be able to be movable only within a predetermined range. The case connector is movable integrally with the case 112. Accordingly, the case 112 is movable relative to the frame 111.

The body 110 includes a bumper 112b disposed in a front portion thereof. The bumper 112b absorbs an impact when the bumper 112b comes in contact with an external obstacle. In a front surface portion of the bumper 112b, a bumper groove is formed, which is recessed rearward and formed to be elongated in the right-left direction. A plurality of bumper grooves may be disposed spaced apart in the up-down direction. A lower end of the protruding rib 111ba is disposed at a lower position than a lower end of the auxiliary rib 111bb.

In the bumper 112b, a front surface and right and left surfaces are formed to be connected to each other. The front surface and the side surfaces of the bumper 112b are connected to each other to be rounded.

The body 110 may include a bumper auxiliary portion 112c which is disposed to surround an outer surface of the bumper 112b. The bumper auxiliary part 112c is coupled to the bumper 112b. The bumper auxiliary portion 112c surrounds a lower portion and lower portions of right and left sides of a front surface of the bumper 112b. The bumper auxiliary portion 112c may cover the front surface and lower half portions of the right and left sides of the bumper 112b.

A front end surface of the bumper auxiliary portion 112c is disposed in front of a front end surface of the bumper 112b. The bumper auxiliary portion 112c forms a surface protruding from a surface of the bumper 112b.

The bumper auxiliary portion 112c may be formed of a material which is advantageous for shock absorption, such as rubber. The bumper auxiliary part 112c may be formed of a flexible material.

The frame 111 may include a movable fixing portion (not illustrated) to which the bumper 112b is fixed. The movable fixing portion may be disposed to protrude upward from the frame 111. The bumper 112b may be fixed to an upper end portion of the movable fixing portion.

The bumper 112b may be disposed to be movable within a predetermined range with respect to the frame 111. The bumper 112b is fixed to the movable fixing portion and can move integrally with the movable fixing portion.

The movable fixing portion may be disposed to be movable with respect to the frame 111. The movable fixing portion may be provided so that the movable fixing portion is rotatable within a predetermined range with respect to the frame 111 about a virtual rotation axis. Accordingly, the bumper 112b may be rotatably provided integrally with the movable fixing portion with respect to the frame 111.

The body 110 includes a handle 113. The handle 113 may be disposed on a rear side of the case 112.

The body 110 includes a battery input portion 114 through which a battery is taken in or out. The battery input portion 114 may be disposed on a bottom surface of the frame 111. The battery input unit 114 may be disposed on a rear side of the frame 111.

The body 110 includes a power switch 115 for turning on/off power of the moving robot 100. The power switch 115 may be disposed on the bottom surface of the frame 111.

The body 110 includes a blade protector 116 which covers a lower side of a central portion of the blade 131. The blade protector 116 is provided so that a blade of a centrifugal portion of the blade 131 is exposed, but the central portion of the blade 131 is covered.

The body 110 includes a first opening/closing unit 117 which opens and closes a portion where a height adjuster 156 and a height display 157 are disposed. The first opening and closing portion 117 is hinged to the case 112 and is provided to enable opening and closing operations. The first opening/closing portion 117 is disposed on an upper surface of the case 112.

The first opening/closing portion 117 is formed in a plate shape, and covers upper sides of the height adjuster 156 and the height display 157 in a closed state.

The body 110 includes a second opening/closing unit 118 for opening and closing a portion where a display module 165 and an input unit 164 are disposed. The second opening/closing unit 118 is hinged to the case 112 and is provided to enable opening and closing operations. The second opening/closing portion 118 is disposed on the upper surface of the case 112. The second opening/closing unit 118 is disposed behind the first opening/closing unit 117.

The second opening/closing unit 118 is formed in a plate shape, and covers the display module 165 and the input unit 164 in a closed state.

An openable angle of the second opening/closing unit 118 is preset to be smaller than an openable angle of the first opening/closing unit 117. Accordingly, even in an open state of the second opening/closing unit 118, the user can easily open the first opening/closing unit 117, and the user can easily operate the height adjuster 156. In addition, even in the open state of the second opening/closing unit 118, the user can visually check a content of the height display 157.

For example, the openable angle of the first opening/closing unit 117 may be provided to be about 80 to 90° based on the closed state. For example, an openable angle of the second opening/closing unit 118 may be provided to be about 45 to 60° based on the closed state.

In the first opening/closing unit 117, a rear end thereof is raised upward with a front end thereof as a center, and thus, the first opening/closing unit 117 is opened. Moreover, in the second opening/closing unit 118, a rear end thereof is raised upward with a front end thereof as a center, and thus, the second opening/closing unit 118 is opened. Accordingly, the user can open and close the first opening/closing unit 117 and the second opening/closing unit 118 from a rear side of the lawn mowing robot 100, which is a safe area even when the lawn mowing robot 100 moves forward. In addition, the opening operation of the first opening/closing unit 117 and the opening operation of the second opening/closing unit 118 may be prevented from interfering with each other.

The first opening/closing unit 117 may be provided to be rotatable with respect to the case 112, about a rotation axis extending in the right-left direction on the front end of the first opening/closing unit 117. The second opening/closing unit 118 may be provided to be rotatable with respect to the case 112, about a rotation axis extending in a right-left direction on the front end of the second opening/closing unit 118.

The body 110 may include a first motor housing 119a accommodating a first driving motor 123(L) therein, and a second motor housing 119b accommodating the second driving motor 123(R) therein. The first motor housing 119a may be fixed to a left side of the frame 111, and the second motor housing 119b may be fixed to a right side of the frame 111. A right end of the first motor housing 119a is fixed to the frame 111. A left end of the second motor housing 119b is fixed to the frame 111.

The first motor housing 119a is formed in a cylindrical shape forming a height from side to side. The second motor housing 119b is formed in a cylindrical shape forming a height from side to side.

The traveler 120 includes a drive wheel 121 which is rotated by a driving force of the drive motor module 123. The traveler 120 may include at least one pair of drive wheels 121 which is rotated by the driving force of the drive motor module 123. The driving wheel 121 includes a first wheel 121(L) and a second wheels 121(R) provided on the left and right sides so as to be independently rotatable. The first wheel 121(L) is disposed on the left side, and the second wheel 121(R) is disposed on the right side. The first wheel 121(L) and the second wheel 121(R) are spaced apart from side to side. The first wheel 121(L) and the second wheel 121(R) are disposed on a lower rear side of the body 110.

The first wheel 121(L) and the second wheel 121(R) are provided to be rotatable independently so that the body 110 can rotate and move forward with respect to the ground. For example, when the first wheel 121(L) and the second wheel 121(R) rotate at the same rotational speed, the body 110 may move forward with respect to the ground. For example, when the rotational speed of the first wheel 121(L) is faster than the rotational speed of the second wheel 121(R) or when a rotational direction of the first wheel 121(L) and a rotational direction of the second wheel 121(R) are different from each other, the body 110 may rotate with respect to the ground.

The first wheel 121(L) and the second wheel 121(R) may be formed larger than the auxiliary wheel 125. A shaft of the first driving motor 123 (L) may be fixed to a center portion of the first wheel 121(L), and a shaft of the second driving motor 123(R) may be fixed to a center portion of the second wheel 121(R).

The driving wheel 121 includes a wheel outer peripheral portion 121b which is in contact with the ground. For example, the wheel outer portion 121b may be a tire. A plurality of protrusions for increasing a frictional force with the ground may be formed on the wheel outer peripheral portion 121b.

The driving wheel 121 may include a wheel frame (not illustrated) which fixes the wheel outer peripheral portion 121b and receives power from the motor 123. The shaft of the motor 123 is fixed to a center portion of the wheel frame, and thus, a rotational force can be transmitted to the wheel frame. The wheel outer peripheral portion 121b is disposed to surround a periphery of the wheel frame.

The driving wheel 121 includes a wheel cover 121a covering an outer surface of the wheel frame. The wheel cover 121a is disposed in a direction opposite to a direction in which the motor 123 is disposed based on the wheel frame. The wheel cover 121a is disposed at the center portion of the wheel outer peripheral portion 121b.

The traveler 120 includes the driving motor module 123 which generates a driving force. The traveler 120 includes the drive motor module 123 which provides the driving force to the driving wheel 121. The driving motor module 123 includes the first driving motor 123(L) which provides the driving force to the first wheel 121(L), and the second driving motor 123(R) which provides the driving force to the second wheel 121(R). The first driving motor 123(L) and the second driving motor 123(R) may be disposed spaced apart from side to side. The first driving motor 123(L) may be disposed on a left side of the second driving motor 123(R).

The first driving motor 123(L) and the second driving motor 123(R) may be disposed on the lower portion of the body 110. The first driving motor 123(L) and the second driving motor 123(R) may be disposed at the rear portion of the body 110.

The first driving motor 123(L) may be disposed on a right side of the first wheel 121(L), and the second driving motor 123(R) may be disposed on a left side of the second wheel 121(R). The first driving motor 123(L) and the second driving motor 123(R) are fixed to the body 110.

The first driving motor 123 (L) is disposed inside the first motor housing 119a, and the motor shaft may protrude to the left. The second driving motor 123(R) is disposed inside the second motor housing 119b, and the motor shaft may protrude to the right.

In the present embodiment, the first wheel 121(L) and the second wheel 121(R) are directly connected to a rotating shaft of the first driving motor 123(L) and a rotating shaft of the second driving motor 123(R), respectively. However, a component such as a shaft may be connected to the first wheel 121(L) and the second wheel 121(R), a rotational force of the motors 123(L) and 123(R) may be transmitted to the wheels 121a and 120b via a gear or chain.

The traveler 120 may include the auxiliary wheel 125 which supports the body 110 together with the driving wheel 121. The auxiliary wheel 125 may be disposed in front of the blade 131. The auxiliary wheel 125 is a wheel which does not receive the driving force by the motor, and serves to assist the body 110 with respect to the ground. A caster supporting a rotating shaft of the auxiliary wheel 125 is coupled to the frame 111 to be rotatable about a vertical axis. The first auxiliary wheel 125(L) disposed on the left side and the second auxiliary wheel 125(R) disposed on the right side may be provided.

The operator 130 is provided to perform a predetermined work. The operator 130 is disposed on the body 110.

For example, the operator 130 may be provided to perform works such as cleaning or lawn mowing. As another example, the operator 130 may be provided to perform a work such as transporting an object or finding an object. As still another example, the operator 130 may perform a security function for detecting an external intruder or a dangerous situation.

In the present embodiment, the operator 130 is described as performing mowing. However, a type of a work to be performed by the operator 130 may be various, and need not be limited to the example of the description.

The operator 130 may include the blade 131 rotatably provided to mow the lawn. The operator 130 may include a blade motor 132 which provides a rotational force to the blade 131.

The blade 131 is disposed between the driving wheel 121 and the auxiliary wheel 125. The blade 131 is disposed on the lower portion of the body 110. The blade 131 is provided to be exposed from the lower side of the body 110. The blade 131 rotates around a rotation axis extending in an up-down direction to mow the lawn.

The blade motor 132 may be disposed in front of the first wheel 121(L) and the second wheel 121(R). The blade motor 132 is disposed in a lower portion of a central portion in an inner space of the body 110.

The blade motor 132 may be disposed behind the auxiliary wheel 125. The blade motor 132 may be disposed in the lower portion of the body 110. The rotational force of the motor shaft is transmitted to the blade 131 using a structure such as a gear.

The moving robot 100 includes a battery (not illustrated) which supplies power to the driving motor module 123. The battery provides power to the first driving motor 123(L). The battery provides power to the second driving motor 123(R). The battery may supply power to the blade motor 132. The battery may provide power to a controller 190, an azimuth sensor 176, and an output unit 165. The battery may be disposed on a lower side of a rear portion in the inner space of the body 110.

The moving robot 100 is provided to change a height of the blade 131 with respect to the ground, and thus, can change a mowing height of the grass. The moving robot 100 includes the height adjuster 156 for the user to change the height of the blade 131. The height adjuster 156 may include a rotatable dial, and the dial is rotated to change the height of the blade 131.

The moving robot 100 includes the height display 157 which displays a level of the height of the blade 131. When the height of the blade 131 is changed according to an operation of the height adjuster 156, the height level displayed by the height display 157 is also changed. For example, the height display 157 may display a predicted height value of the lawn after the moving robot 100 performs lawn mowing with a current height of the blade 131.

The moving robot 100 includes a docking insertion 158 which is connected to a docking device 200 when the moving robot 100 docks with the docking device 200. The docking insertion 158 is provided to be recessed to be inserted into the docking connector 210 of the docking device 200. The docking insertion 158 is disposed on the front surface portion of the body 110. The moving robot 100 can be correctly guided when being charged by the connection of the docking insertion 158 and the docking connector 210.

The moving robot 100 may include a charging corresponding terminal 159 disposed at a position contactable with a charging terminal 211 to be described later in a state where the docking insertion 158 is inserted into the docking connector 210. The charging corresponding terminal 159 may include a pair of charging corresponding terminals 159a and 159b disposed at positions corresponding to the pair of charging terminals 211 (211a and 211b). The pair of charging correspondence terminals 159a and 159b may be disposed left and right in a state where the docking insertion portion 158 is interposed therebetween.

A terminal cover (not illustrated) may be provided to cover the docking insertion 158 and the pair of charging terminals 211 (211a, 211b) so as to be opened and closed. When the moving robot 100 travels, the terminal cover may cover the docking insertion 158 and the pair of charging terminals 211 (211a and 211b). When the moving robot 100 is connected to the docking device 200, the terminal cover is opened, and the docking insertion 158 and the pair of charging terminals 211 (211a and 211b) may be exposed.

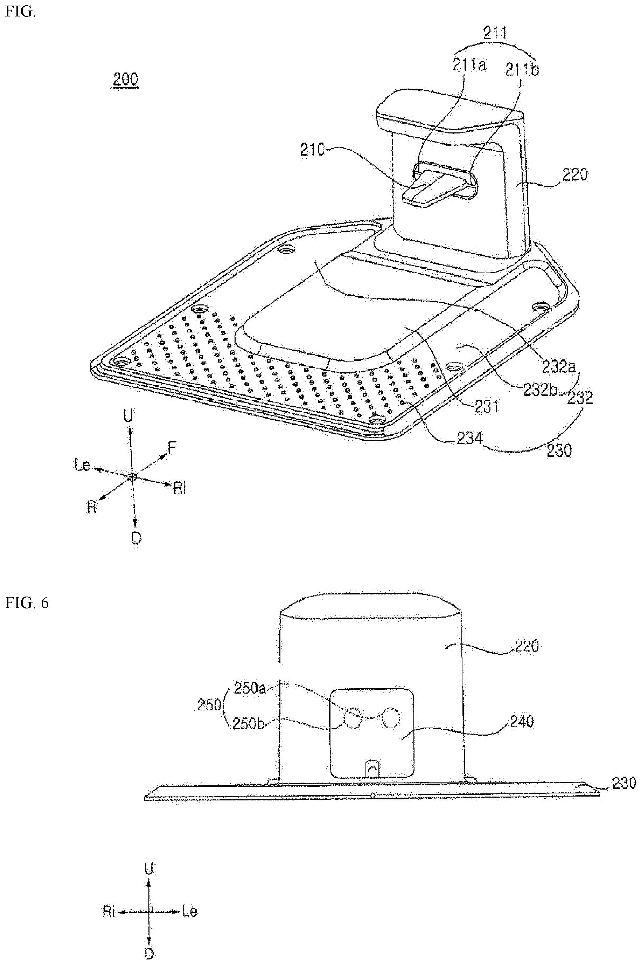

Meanwhile, referring to FIGS. 5 and 6, the docking device 200 includes a docking base 230 disposed on the floor and a docking support 220 protruding upwardly from a front portion of the docking base 230.

The docking base 230 defines a surface parallel in a horizontal direction. The docking base 230 has a plate shape so that the moving robot 100 can be seated. The docking support 220 extends from the docking base 230 in a direction intersecting the horizontal direction.

The moving robot 100 includes the docking connector 210 which is inserted into the docking insertion 158 when the moving robot 100 is charged. The docking connector 210 protrude rearward from the docking support 220.

The docking connector 210 may have a thickness in the up-down direction smaller than a width in the right-left direction. The width of the docking connector 210 in the right-left direction may narrowed rearward. When viewed from above, a shape of the docking connection 210 is trapezoidal in whole. The docking connector 210 is formed in a right and left symmetrical shape. A rear portion of the docking connector 210 forms a free end, and a front portion of the docking connector 210 is fixed to the docking support 220. The rear portion of the docking connector 210 may be formed in a rounded shape.

When the docking connector 210 is completely inserted into the docking insertion 158, the moving robot 100 may be charged by the docking device 200.

The docking device 200 includes the charging terminal 211 for charging the moving robot 100. The charging terminal 211 and the charging corresponding terminal 159 of the moving robot 100 come into contact with each other, and thus, power for charging may be supplied from the docking device 200 to the moving robot 100.

The charging terminal 211 includes a contact surface facing the rear side, and the charging corresponding terminal 159 includes a contact corresponding surface facing the front side. The contact surface of the charging terminal 211 and the contact corresponding surface of the charging corresponding terminal 159 come into contact with each other, and thus, the power of the docking device 200 is connected to the moving robot 100.

The charging terminal 211 may include the pair of charging terminals 211 (211a and 211b) forming positive and negative poles. The first charging terminal 221 (211a) is provided to come into contact with the first charging terminal 159a, and the second charging terminal (211) 211b is provided to come into contact with the second charging terminal 159b.

The pair of charging terminals (211) 211a and 211b may be disposed in a state where the docking connector 210 is interposed therebetween. The pair of charging terminals (211) 211a and 211b may be disposed on right and left of the docking connector 210.

The docking base 230 includes a wheel guard 232 on which the driving wheel 121 and the auxiliary wheel 125 of the moving robot 100 ride. The wheel guard 232 includes a first wheel guard 232a which guides a movement of the first auxiliary wheel 125 and a second wheel guard 232b which guides a movement of the second auxiliary wheel 125. An upper convex center base 231 is disposed between the first wheel guard 232a and the second wheel guard 232b. The docking base 230 includes a slip prevention 234 for preventing slipping of the first wheel 121(L) and the second wheel 121(R). The slip prevention 234 may include a plurality of protrusions protruding upward.

Meanwhile, a boundary wire 290 for setting a boundary of a traveling area of the moving robot 100 may be implemented. The boundary wire 290 may generate a predetermined boundary signal. The moving robot 100 may detect a boundary signal and recognize a boundary of the traveling area set by the boundary wire 290.

For example, a predetermined current flows along the boundary wire 290 to generate a magnetic field around the boundary wire 290. Here, the generated magnetic field is a boundary signal. An AC current having a predetermined change pattern may flow through the boundary wire 290 so that the magnetic field generated around the boundary wire 290 may be changed to have a predetermined change pattern. The moving robot 100 can recognize that the moving robot 100 approaches the boundary wire 290 within a predetermined distance using a boundary signal detector 177 which detects the magnetic field, and thus, the moving robot 100 can travel only the traveling area within the boundary set by the boundary wire 290.

The boundary wire 290 may generate a magnetic field in a direction different from a reference wire 270. For example, the boundary wire 290 may be disposed substantially parallel to the horizontal plane. Here, the "substantially parallel" can include parallelism in an engineering sense, including complete parallelism in a mathematical sense and a certain level of error.

The docking device 200 may serve to transmit a predetermined current to the boundary wire 290. The docking device 200 may include a wire terminal 250 connected to the boundary wire 290. Both ends of the boundary wire 290 may be connected to a first wire terminal 250a and a second wire terminal 250b, respectively. When the boundary wire 290 and the wire terminal 250 are connected to each other, the power of the docking device 200 can supply a current to the boundary wire 290.

The boundary wire 290 may include a plurality of boundary wires which define boundaries of the plurality of traveling areas. That is, the entire area may be divided into two areas for a random homing traveling path.

The wire terminal 250 may be disposed at a front portion F of the docking device 200. That is, the wire terminal 250 may be disposed on a side opposite to a direction in which the docking connector 210 protrudes. The wire terminal 250 may be disposed on the docking support 220. The first wire terminal 250a and the second wire terminal 250b may be disposed spaced apart from side to side.

The docking device 200 may include a wire terminal opening/closing portion 240 which covers the wire terminal 250 so that the wire terminal 250 can be opened or closed. The wire terminal opening/closing portion 240 may be disposed at the front F of the docking support 220. The wire terminal opening/closing portion 240 is hinged to the docking support 220 and may be preset to perform an opening/closing operation when the wire terminal opening/closing portion 240 is rotated.

Meanwhile, the reference wire 270 for recognizing the position of the docking device 200 to the moving robot 100 may be implemented. The reference wire 270 may generate a predetermined docking position signal. The moving robot 100 detects the docking position signal, recognizes the position of the docking device 200 by the reference wire 270, and may return to the recognized position of the docking device 200 when a return command or charging is required. The position of the docking device 200 may be a reference point of the traveling of the moving robot 100.

The reference wire 270 is formed of a conductive material through which electricity can flow. The reference wire 270 may be connected to the power supply of the docking device 200 to be described later.

For example, a magnetic field may be generated around the reference wire 270 by causing a predetermined current to flow along the reference wire 270. Here, the generated magnetic field is the docking position signal. By allowing an alternating current having a predetermined change pattern to flow through the reference wire 270, a magnetic field generated around the reference wire 270 may change with a predetermined change pattern. The moving robot 100 can recognize that the moving robot 100 is close to the reference wire 270 within a predetermined distance by using the boundary signal detector 177 which detects the magnetic field, and accordingly, the moving robot 100 can return to the position of the docking device 200 set by the reference wire 270.

The reference wire 270 may generate the magnetic field in a direction distinct from the boundary wire 290. For example, the reference wire 270 may extend in a direction intersecting the horizontal direction. Preferably, the reference wire 270 may extend in the up-down direction orthogonal to the horizontal direction.

The reference wire 270 may be installed on the docking device 200. The reference wire 270 may be disposed at various positions in the docking device 200.

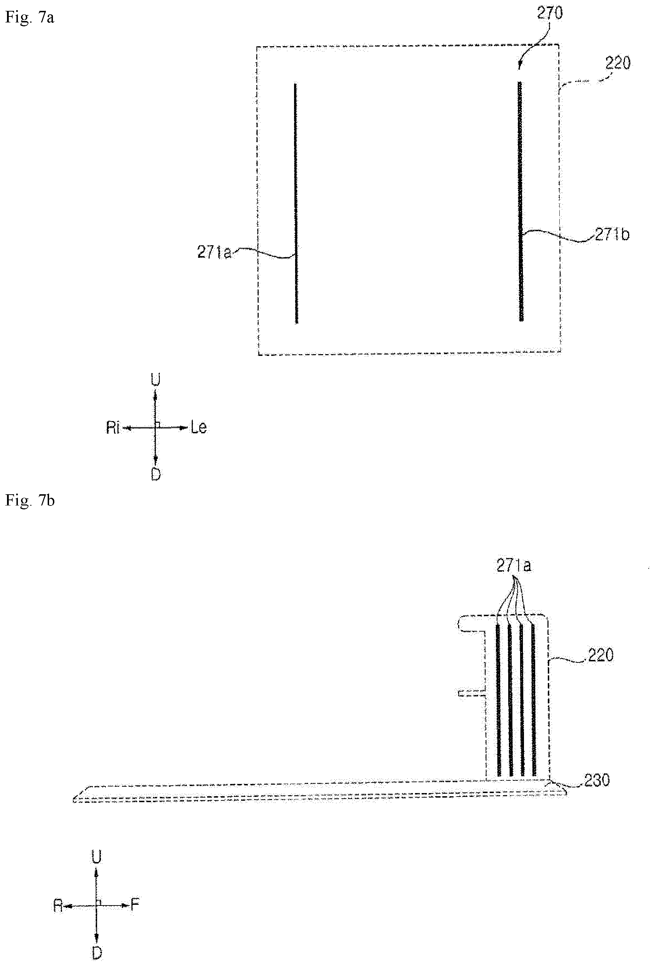

FIG. 7a is a view when the reference wire 270 according to a first embodiment of the present disclosure is viewed from the rear, and FIG. 7b is a view when the reference wire 270 according to the first embodiment of the present disclosure is viewed from one side.

With reference to FIGS. 6, 7a, and 7b, the reference wire 270 according to the first embodiment may be disposed inside the docking support 220. Since the reference wire 270 needs to generate a magnetic field signal in the horizontal direction, the reference wire 270 is disposed to extend in the vertical direction. When the reference wire 270 is disposed on the docking base 230, there is a disadvantage that a thickness of the docking base 230 becomes very thick.

The reference wire 270 may include at least a vertical portion 271 extending in a direction intersecting the horizontal direction. The vertical portion 271 may be disposed substantially in parallel with the up-down direction UD.

A direction of electricity input into the vertical portion 271 of the reference wire 270 may proceed from the top to the bottom or from the bottom to the top.

A plurality of vertical portions 271 may be disposed in order to generate the docking position signal more than a certain level in the entire peripheral area of the docking device 200. For example, the vertical portion 271 may include a first vertical portion 271a and a second vertical portion 271b which is disposed to be spaced apart from the first vertical portion 271a. Of course, the vertical portion 271 may include only one of the first vertical portion 271a and the second vertical portion 271b.

The first vertical portion 271a and the second vertical portion 271b are disposed to be spaced apart in the right-left direction. The first vertical portion 271a may be disposed adjacent to a right end of the docking support 220, and the second vertical portion 271b may be disposed adjacent to a left end of the docking support 220. When the first vertical portion 271a and the second vertical portion 271b are disposed adjacent to both ends of the docking support 220, an area in which the magnetic field is generated by the reference wire 270 is expanded as far as possible around the docking device 200.

The first vertical portion 271a and the second vertical portion 271b may have the same or different directions of current. Preferably, when electricity flows from the top to the bottom in the first vertical portion 271a, electricity may flow in the second vertical portion 271b from the bottom to the top.

In order to reinforce the strength of the electric field of the first vertical portion 271a and the second vertical portion 271b, a plurality of first vertical portions 271a and a plurality of second vertical portions 271b may be provided, respectively. Each of the first vertical portion 271a and the second vertical portion 271b may be an assembly of several wires, and the first vertical portion 271a and the second vertical portion 271b may have a certain arrangement. Of course, one first vertical portion 271a and one second vertical portion 271b may be disposed.

For example, a plurality of first vertical portions 271a may be disposed in a row along a line extending in the front-rear direction, and a plurality of second vertical portions 271b may be disposed in a row along a line extending in the front-rear direction.

When the plurality of first vertical portions 271a and the second vertical portions 271b are disposed at both ends of the docking support 220 in the right-left direction and disposed in rows in the front-rear direction, the charging terminal 211 and the docking connector 210 may be disposed between the plurality of first vertical portions 271a and the second vertical portion 271b. When the charging terminal 211 and the docking connector 210 are disposed between the plurality of first vertical portions 271a and the plurality of second vertical portions 271b, there is an advantage in that the reference wire 270 can be disposed without changing configurations of the charging terminal 211 and the docking connector 210.

The plurality of first vertical portions 271a and the plurality of second vertical portions 271b may be electrically connected to each other or may receive electricity from a separate power source. The docking device 200 may serve to send a predetermined current to the reference wire 270. The docking device 200 may include the wire terminal 250 connected to the reference wire 270. Both ends of the reference wire 270 may be connected to the first wire terminal 250a and the second wire terminal 250b, respectively. Through the connection between the reference wire 270 and the wire terminal 250, the power of the docking device 200 may supply current to the reference wire 270.

Specifically, both ends of the plurality of first vertical portions 271a may be connected to the first wire terminal 250a and the second wire terminal 250b, respectively, and both ends of the plurality of second vertical portions 271b may be connected to the first wire terminal 250a and the second wire terminal 250b, respectively.

Of course, the reference wire 270 according to another example may further include a horizontal portion (not illustrated). In this case, the reference wire 270 may have a structure in which the first vertical portion 271a and the second vertical portion 271b are connected to each other to receive power from one power source.

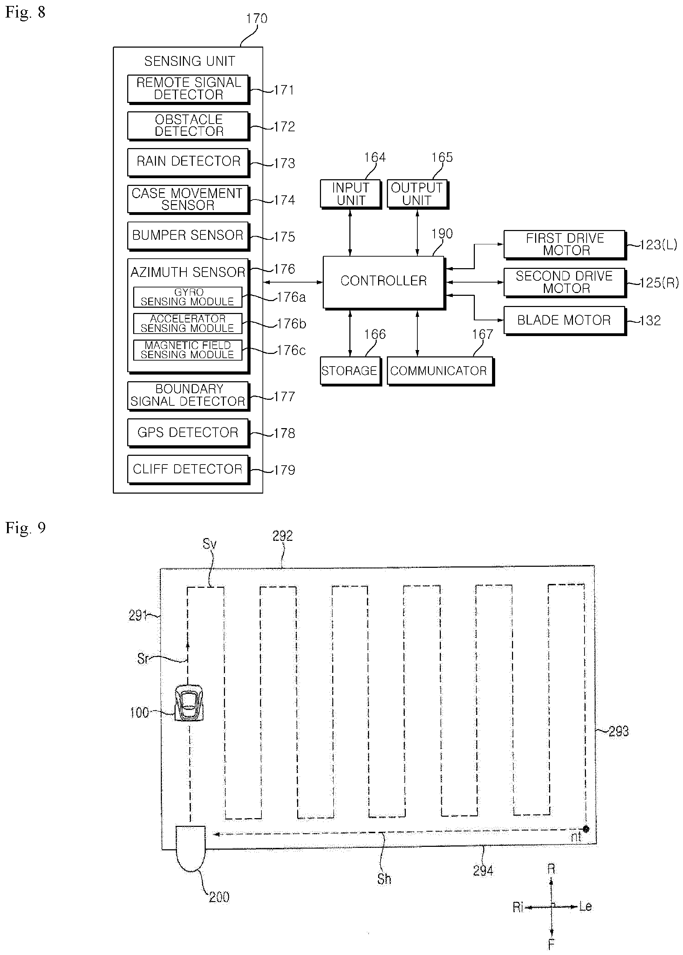

FIG. 8 is a block diagram illustrating a control relationship of the moving robot 100 of FIG. 1.

Meanwhile, referring to FIG. 8, the moving robot 100 may include the input unit 164 capable of inputting various instructions of the user. The input unit 164 may include a button, a dial, and a touch-type display. The input unit 164 may include a microphone (not illustrated) for speech recognition. In the present embodiment, a plurality of buttons are disposed on an upper portion of the case 112.

The moving robot 100 may include the output unit 165 which outputs various information to the user. The output unit 165 may include a display module which outputs visual information. The output unit 165 may include a speaker (not illustrated) which outputs auditory information.

In the present embodiment, the display module 165 outputs an image upward. The display module 165 is disposed on the upper portion of the case 112. As an example, the display module 165 may include a thin film transistor liquid-crystal display (LCD) panel. In addition, the display module 165 may be implemented using various display panels such as a plasma display panel or an organic light emitting diode display panel.

The moving robot 100 includes a storage 166 for storing various information. The storage 166 records various information necessary for the control of the moving robot 100, and may include a volatile or nonvolatile recording medium. The storage 166 may store information input from the input unit 164 or received by a communicator 167. A program for controlling the moving robot 100 may be stored in the storage 166.

The moving robot 100 may include the communicator 167 for communicating with an external device (terminal or the like), a server, a router, or the like. For example, the communicator 167 may be implemented to wirelessly communicate with wireless communication technologies such as IEEE 802.11 WLAN, IEEE 802.15 WPAN, UWB, Wi-Fi, Zigbee, Z-wave, and Blue-Tooth. The communicator may be changed depending on the communication method of another device or a server.

The moving robot 100 includes a sensing unit 170 which senses information related to a state of the moving robot 100 or an environment outside the moving robot 100. The sensing unit 170 may be include at least one of a remote signal detector 171, an obstacle detector 172, a rain detector 173, a case movement sensor 174, a bumper sensor 175, azimuth sensor 176, boundary signal detector 177, a GPS detector 178, and a cliff detector 179.

The remote signal detector 171 receives an external remote signal. When the remote signal is transmitted by an external remote controller, the remote signal detection unit 171 may receive the remote signal. For example, the remote signal may be an infrared signal. The signal received by the remote signal detector 171 may be processed by the controller 190.

A plurality of remote signal detector 171 may be provided. The plurality of remote signal detectors 171 include a first remote signal detection unit 171a disposed on the front portion of the body 110 and a second remote signal detection unit 171b disposed on the rear portion of the body 110. The first remote signal detector 171a receives a remote signal transmitted from the front. The second remote signal detector 171b receives a remote signal transmitted from the rear.

The obstacle detector 172 detects an obstacle around the moving robot 100. The obstacle detector 172 may detect an obstacle in front. A plurality of obstacle detectors 172a, 172b, and 172c may be provided. The obstacle detector 172 is disposed on the front surface of the body 110. The obstacle detector 172 is disposed above the frame 111. The obstacle detector 172 may include an infrared sensor, an ultrasonic sensor, an RF sensor, a geomagnetic sensor, a Position Sensitive Device (PSD) sensor, or the like.

The rain detector 173 detects rain when rain occurs in an environment where the moving robot 100 is placed. The rain detector 173 may be disposed in the case 112.

The case movement sensor 174 detects the movement of the case connector. When the case 112 is raised upward with respect to the frame 111, the case connector moves upward, and the case movement sensor 174 detects that the case 112 is raised. When the case movement sensor 174 detects that the case 112 is raised, the controller 190 may control to stop the operation of the blade 131. For example, when the user raises the case 112 or a situation in which the case 112 is raised by a lower obstacle having a significant size occurs, the case movement sensor 174 may detect this.

The bumper sensor 175 can detect a rotation of the movable fixing portion. For example, a magnet may be disposed on one side of the lower portion of the movable fixing portion, and a sensor which detects a change in the magnetic field of the magnet may be disposed on the frame 111. When the movable fixing portion rotates, the sensor detects the change in the magnetic field of the magnet, and thus, the bumper sensor 175 which detects the rotation of the movable fixing portion can be implemented. When the bumper 112b collides with an external obstacle, the movable fixing portion rotates integrally with the bumper 112b. The bumper sensor 175 may detect the rotation of the movable fixing portion, and thus, detect an impact of the bumper 112b.

The azimuth sensor (AHRS) 176 may have a gyro sensing function. The azimuth sensor 176 may further include an acceleration sensing function. The azimuth sensor 176 may further include a magnetic field sensing function.

The azimuth sensor 176 may include a gyro sensing module 176a which performs gyro sensing. The gyro sensing module 176a may detect the horizontal rotational speed of the body 110. The gyro sensing module 176a may detect a tilting speed with respect to the horizontal surface of the body 110.

The gyro sensing module 176a may include a gyro sensing function for three axes of a spatial coordinate system orthogonal to each other. The information collected by the gyro sensing module 176a may be roll, pitch, and yaw information. The processing module can calculate direction angles of the moving robot 100 by integrating the angular velocities of rolling, pitching, and yaw.

The azimuth sensor 176 may include an acceleration sensing module 176b which performs acceleration sensing. The acceleration sensing module 176b may have an acceleration sensing function for the three axes of the spatial coordinate system orthogonal to each other. A given processing module can calculate the speed by integrating the acceleration, and can calculate a moving distance by integrating the speed.

The azimuth sensor 176 may include a magnetic field sensing module 176c which performs magnetic field sensing. The magnetic field sensing module 176c may have a magnetic field sensing function for three axes of a spatial coordinate system orthogonal to each other. The magnetic field sensing module 176c may detect the magnetic field of the Earth.

The boundary signal detector 177 detects the boundary signal of the boundary wire 290 or/and the docking position signal of the reference wire 270.

The boundary signal detector 177 may be disposed in the front portion of the body 110. Accordingly, it is possible to detect the boundary of the traveling area early while moving forward, which is a main traveling direction of the moving robot 100. The boundary signal detector 177 may be disposed in an inner space of the bumper 112b.

The boundary signal detector 177 may include a first boundary signal detector 177a and a second boundary signal detector 177b which are spaced apart from side to side. The first boundary signal detector 177a and the second boundary signal detector 177b may be disposed in the front portion of the body 110.

For example, the boundary signal detector 177 includes a magnetic field sensor. The boundary signal detector 177 may be implemented using a coil to detect a change in a magnetic field. The boundary signal detector 177 may detect a magnetic field in at least a horizontal direction. The boundary signal detector 177 may detect a magnetic field with respect to three axes which are orthogonal to each other in space.

Specifically, the first boundary signal detector 177a may detect a magnetic field signal in a direction orthogonal to the second boundary signal detector 177b. The first boundary signal detector 177a and the second boundary signal detector 177b may detect magnetic field signals in directions orthogonal to each other, and combine the detected magnetic field signal values to detect the magnetic field with respect to the three axes orthogonal to each other in the space.

When the boundary signal detector 177 detects the magnetic field with respect to the three axes which are orthogonal to each other in space, the direction of the magnetic field is determined by a sum vector value of the three axes, and if the direction of the magnetic field is close to the horizontal direction, the docking position signal can be recognized, and if the direction of the magnetic field is close to the vertical direction, the boundary signal can be recognized.

Moreover, when a plurality of divided traveling areas are present, the boundary signal detector 177 may distinguish between an adjacent boundary signal and boundary signals of the plurality of traveling areas by a difference in an intensity of the magnetic field, and the boundary signal detector 177 may distinguish the adjacent boundary signal and the docking position signal by a difference in direction of the magnetic field.

In another example, when the plurality of divided traveling areas are present, the boundary signal detector 177 may distinguish the adjacent boundary signal and the boundary signals of the plurality of traveling areas by a difference in distribution of the magnetic field. Specifically, the boundary signal detector 177 may recognize the adjacent boundary signal by detecting the intensity of the magnetic field within a preset distance on plane coordinates having a plurality of peaks.

The GPS detector 178 may be provided to detect a Global Positioning System (GPS) signal. The GPS detector 178 may be implemented using a PCB.

The cliff detection unit 179 detects the presence of a cliff on the traveling surface. The cliff detection unit 179 is disposed in the front portion of the body 110 and can detect the presence or absence of a cliff in front of the moving robot 100.

The sensing unit 170 may include an opening/closing detector (not illustrated) which detects whether at least one of the first opening/closing unit 117 and the second opening/closing unit 118 is opened or closed. The opening/closing detector may be disposed in the case 112.

The moving robot 100 includes the controller 190 which controls autonomous traveling. The controller 190 may process a signal of the sensing unit 170. The controller 190 can process a signal of the input unit 164.

The controller 190 may control the driving of the first driving motor 123(L) and the second driving motor 123(R). The controller 190 may control the driving of the blade motor 132. The controller 190 can control the output of the output unit 165.

The controller 190 includes a main board (not illustrated) disposed in the inner space of the body 110. The main board means a PCB.

The controller 190 may control the autonomous driving of the moving robot 100. The controller 190 may control the driving of the traveler 120 based on the signal received from the input unit 164. The controller 190 may control the driving of the traveler 120 based on the signal received from the sensing unit 170.

In addition, the controller 190 may process the signal of the boundary signal detector 177. Specifically, the controller 190 may determine the current position by analyzing the boundary signal through the boundary signal detector 177 and control the driving of the traveler 120 according to a traveling pattern.

In this case, the controller 190 may control the traveler 120 according to the traveling pattern in the zigzag mode.

Hereinafter, traveling in a zigzag mode according to the control of the controller 190 will be described with reference to FIG. 9.

FIG. 9 is a view illustrating a moving robot 100 system according to an embodiment of the present disclosure.

Referring to FIG. 9, the moving robot 100 system of the present disclosure may include boundary wires 290:291, 292, 293, and 294 disposed to define one traveling area, and the moving robot 100 traveling inside the traveling area. In addition, the system of the moving robot 100 of the present disclosure may further include a docking device 200 in which the moving robot 100 is docked and charged.

In this case, although FIG. 9 illustrates one traveling area as an example, the present invention is not limited thereto, and a plurality of traveling areas may be formed.

The controller 190 may perform a pattern traveling mode in which one traveling area travels in a predetermined pattern. A predetermined pattern traveling mode for moving the body 110 along predetermined pattern paths Sr and Sv is preset. The pattern traveling mode includes at least a predetermined algorithm for driving the traveler 120. The pattern traveling mode may include an algorithm for driving the traveler 120 according to a detection signal from the sensing unit 170.

Specifically, in FIG. 9, the moving robot 100 may travel in a zigzag mode with a position where the docking device 200 is disposed within the traveling area as a starting point. That is, the moving robot 100 travels from the starting point to the rear R along the major axis Sr. In this case, when boundary signals from the boundary wires 291 and 292 are received and an edge area is determined, the moving robot rotates in a direction in which the remaining area exists, that is, right in FIG. 9 and travels along the minor axis Sv.

In this case, the rotation angle may be an angle between 120° and 60°, preferably approximately 90°. In addition, the moving robot can rotate to have a predetermined curvature when rotating right.

Next, when the traveling along the minor axis Sv ends, the moving robot rotates right according to the signals from the boundary wires 291 and 292 again and travels along the major axis Sr.

Traveling along the major axis Sr at this time is to move to the front F, and in this way, the moving robot alternately moves the major axis Sr and the minor axis Sv and travels in a zigzag mode in one traveling area to perform the lawn mowing. Accordingly, a plurality of major axes Sr and a plurality of minor axes Sv for traveling in one traveling area may be designed as a target pattern, and the plurality of major axes Sr may be parallel to each other.

In this case, when the moving robot reaches an edge area nt while performing the lawn mowing in the traveling area in the zigzag mode, if it is determined that there is no longer an area to travel right along the traveling direction according to the boundary signal from the boundary wires 293 and 294, the moving robot perform the traveling toward the docking device 200 according to a homing mode.

In this case, the moving robot may travel zigzag at a predetermined angle along the traveling path Sh when traveling toward the docking device, or may travel in a linear mode.

When one traveling area is formed in this way, lengths of the major axis Sr and the minor axis Sv are set, and the moving robot travels in the zigzag mode along the set major axis Sr and minor axis Sv. The lawn mower robot, which is the moving robot 100, moves according to the pattern traveling mode while rotating the blade 131, and thus, can uniformly mow the lawn in the traveling area.

Meanwhile, the controller 190 may determine whether or not the traveling is complete when a situation in which moving is impossible within one traveling area occurs, and when an abnormal completion point other than the traveling completion occurs, the controller may perform a subsequent traveling mode in which continuous traveling is performed.

Specifically, when the controller 190 reads the boundary signals received through the sensing unit 170 while performing the traveling within one traveling area along a predetermined pattern path, the controller 190 may determine whether or not the situation is a situation in which the traveling is no longer possible.

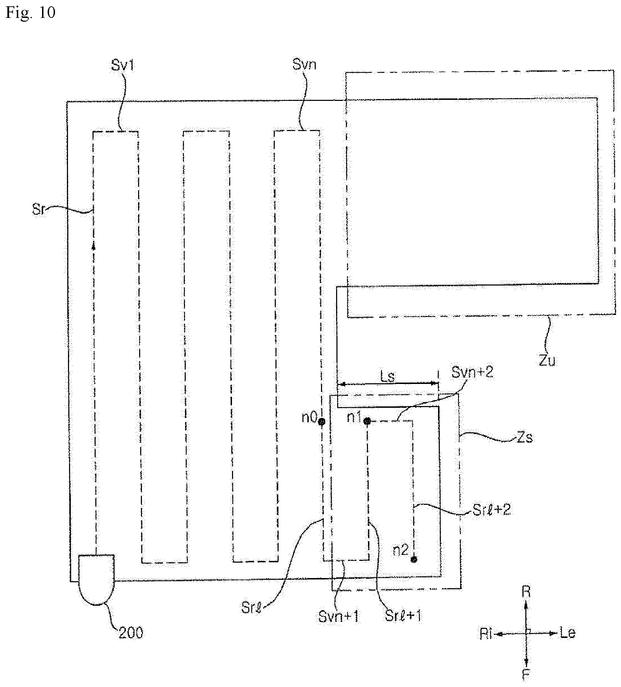

That is, as illustrated in FIG. 10, a case of performing the lawn mowing in an area which includes a shape which is depressed inside or in which the lengths of the major axis Sr and the minor axis Sv are changed within one traveling area may occur.

As an example, when the moving robot 100 travels an area having the shape of FIG. 10, the moving robot performs the lawn mowing while moving the body along the pattern path. Specifically, when the moving robot travels along a first major axis Sr1 and travels in the zigzag mode to perform alternately traveling along the major axis Sr and the minor axis Sv, the moving robot can travel along the major axes Sr having the same lengths up to the first major axis Srl.

In this case, when the moving robot travels forward along the major axis Srl and then rotates right to enter the minor axis Svn+1 and travels along the minor axis Svn+1, the moving robot can detect that the length of the major axis Srl+1 at the next major axis Srl+1 is shorter than the length of the previous major axis Srl. In this case, the moving robot 100 may change setting so that the moving robot can change the setting so that the moving robot 100 travels by the major axis Sr becoming the minor axis obtained by changing the length of the major axis Sr according to the boundary signal from the boundary wire 290, and the major axis Srl+1 can be newly set at a variable point n1.

The moving robot 100 rotate right according to the length of the major axis Srl+1 changed at the variable point n1 and travels along a minor axis Svn+2, and the length of the minor axis Svn+2 can be maintained at a previous length if a length between the minor axis Svn+2 and the boundary wire 290 is longer than the length of the minor axis Svn+2. When the traveling along the minor axis Svn+2 is completed, the moving robot may rotate again and travel to the front F along the changed major axis Srl+2. In this case, after the moving robot receives the boundary signal from the boundary wire 290 after traveling along the major axis Srl+2, the moving robot may reach at a position at which the mowing is no longer possible, for example, a vertex n2.

If the moving robot 100 reaches the vertex n2, in a case where the moving robot 100 receives the boundary signals from both boundary wires 290, when the moving robot cannot find the minor axis Sv to be rotated in the traveling direction (right) and there are no non-traveling major axis and non-traveling minor axes Sr and Sv, the corresponding area can be determined as an area in which the traveling is finished.

In this way, when the moving robot reaches the vertex n2, the moving robot 100 may be performed in the subsequent driving mode in which the non-traveling area (Zu) is found and the lawn mowing is continuously performed.

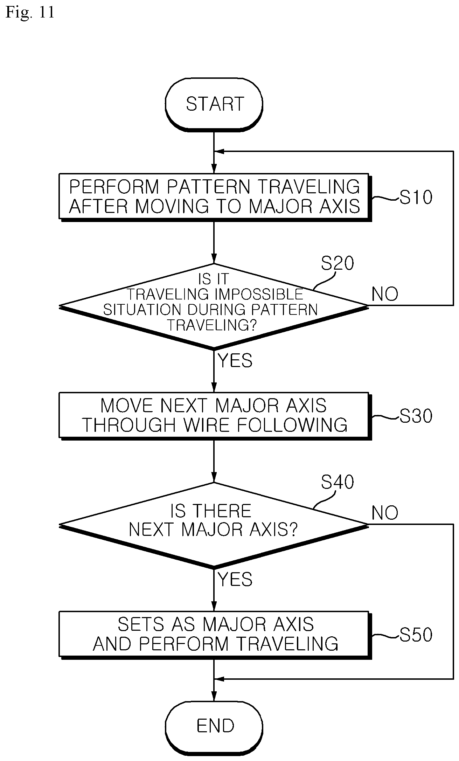

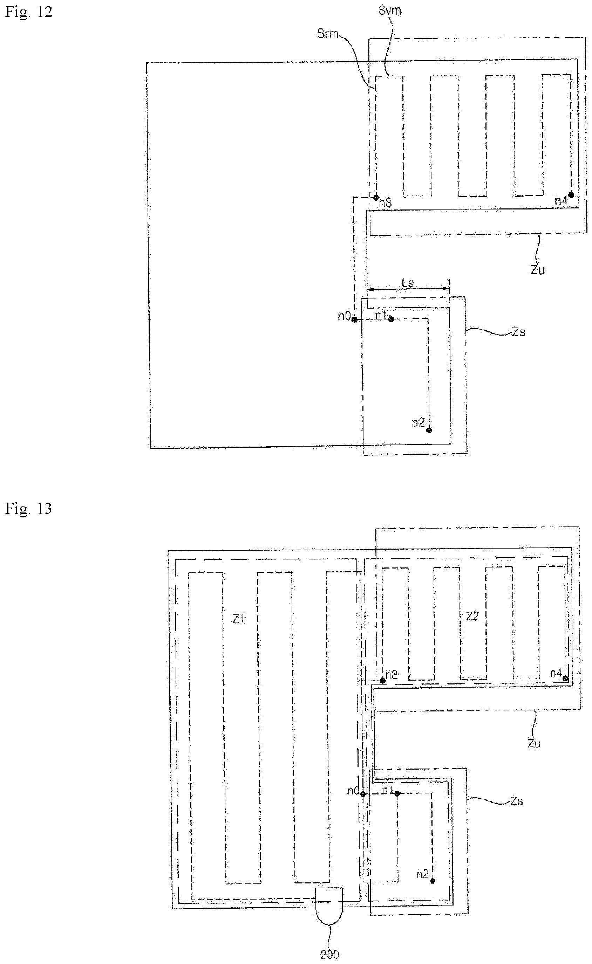

Hereinafter, the subsequent traveling mode of the present disclosure will be described in detail with reference to FIGS. 11 and 12.

FIG. 11 is a flowchart illustrating a control method of the moving robot according to an embodiment of the preset disclosure, and FIG. 12 is a view illustrating the traveling path of the moving robot according to the control method of a moving robot illustrated in FIG. 11.

When the operation of the moving robot starts, the controller 190 of the moving robot 100 performs the pattern traveling mode (S10).

In this case, the controller 190 drives the traveler 120 according to the pattern by the detection signal of the boundary wire 290 and the detection signals from sensors of the sensing unit 170.

Specifically, the moving robot 100 may travel in a zigzag mode with a position at which the docking device 200 is disposed within the traveling area as a starting point. That is, the moving robot 100 travels from the starting point to the rear R along the major axis Sr. In this case, when the boundary signal from the boundary wire 290 is received and the edge area is determined, the moving robot rotates in the direction in which the remaining area exists, that is, the right, and travels along the minor axis Sv.

In this case, the rotation angle may be an angle between 120° to 60°, preferably approximately 90°. In addition, the moving robot can rotate to have a predetermined curvature when rotating to the right.

Next, when the traveling along the minor axis (Sv) ends, the moving robot rotates to the right according to the signal from the boundary wire 290 again and travels along the major axis Sr.

The traveling along the major axis Sr at this time is to move to the front F, and in this way, the moving robot alternately moves the major axis Sr and the minor axis Sv and travels in the zigzag mode in one traveling area to perform the lawn mowing.

While the moving robot travels in this way, when the moving robot reaches the traveling impossible situation according to the shape of the traveling area, the controller 190 determines whether or not the situation is a situation in which the traveling is no longer possible (S20).

Specifically, as illustrated in FIG. 10, the traveling area may include a shape depressed inward, or the lawn mowing may be performed in an area in which the length of the major axis Sr or the minor axis Sv is changed in one traveling area.

When the moving robot 100 reaches the vertex n2 of FIG. 10, the moving robot 100 determines whether or not the situation is a situation in which the traveling is no longer possible at the vertex n2. In this determination, whether or not the minor axis Sv exists in the traveling direction at the vertex n2 can be determined, or specifically, whether or not the non-traveling minor axis Sv abutting on the moving robot when the moving robot rotates right exists can be determined. Moreover, whether or not the non-traveling major axis Sr exists in the traveling direction may be determined together.

Moreover, the controller 190 can determine whether or not a change of the major axis Sr and occurrence of the vertex n2 are generated by an obstacle.

When it is determined that whether or not the change of the major axis Sr and the occurrence of the vertex n2 are generated by an obstacle, when the traveling in the zigzag mode by the major axis Sr changed over some periods ends and the major axis is changed to the major axis Sr which is changed again to be lengthened, it is determined that the obstacle or the island is formed in the traveling area.

When the traveling area at the vertex is not the obstacle or island and the non-traveling major axis Sr and the minor axis Sv are not formed in the traveling direction, it is determined that the pattern traveling is not possible at the vertex n2.

In the case where it is determined that the pattern traveling is not possible at the vertex n2, when a change condition of the previous major axis S4 and the pattern traveling impossibility at the vertex n2 are satisfied, the wire 290 following operation is performed (S30).

Specifically, the controller 190 performs the traveling in the direction of the major axis Sr along the boundary wire 290 at the vertex n2, and this following operation passes through an inflection point n0 and is performed in the rear direction along the shape of the boundary wire 290.

The follow of the boundary wire 290 can be performed by a central follow or a side follow. The central follow means that the traveling is performed to be spaced by a predetermined distance from the boundary wire 290, and the side follow means that the traveling is performed zigzag while a traveling angle is changed by a predetermined angle.

In this case, when the moving robot meets the next major axis Srm during the follow of the boundary wire 290, it is determined that this area, that is, the non-traveling area Zu exists.

The controller 190 sets the new major axis Srm with respect to the non-traveling area Zu to the major axis Srm of the pattern, and thus, the traveling starts in a zigzag mode.

That is, when the moving robot passes through all vertexes of the depression at the inflection points no and n3 and detects the major axis Srm having a new length, the moving robot travels rearward along the major axis Srm. In addition, when the major axis Srm is finished, the moving robot performs the traveling in the traveling direction again, for example, perform the traveling in a zigzag mode in which the moving robot rotates right and travels along the minor axis Svm. This traveling is performed until the traveling with respect to the non-traveling area Zu ends, that is, until the moving robot reaches an end point n4 with respect to the previous traveling area, and when the moving robot reaches the end point n4, the moving robot performs the homing traveling to be returned to the docking device 200.

In this way, in a case where the non-traveling area Au exists due to the change of the major axis Sr according to the shape of the traveling area, by continuously performing the traveling, the lawn moving can be performed at once without the homing or the movement by the user while the moving robot is operated in one traveling area.

Accordingly, it is possible to find the non-traveling area Zu with a minimum search in a state where power of the battery is maintained, the lawn mowing is continuously performed to the non-traveling area Zu to improve power efficiency, and thus, workability can be also improved.

In this way, when the traveling area is defined, a protrusion depth Ls of a protrusion area Zs which is partitioned to have a shape which partially protrudes to have some depression in the area may be formed to have an area smaller than a threshold area when the traveling area is partitioned, and may be set to be equal to or less than 2m.

Hereinafter, a moving robot 100 system according to another embodiment will be described with reference to FIG. 13.

FIG. 13 is a view illustrating the moving robot 100 system according to another embodiment of the present disclosure.

In FIG. 13, in the moving robot 100 system, the boundary wire 290 is disposed along an outer periphery of an area which is a traveling target.

In this case, one area forming a close loop by the boundary wire 290 is defined as the entire area.

In the moving robot 100 system, the traveling is performed for each traveling area obtained by dividing the entire area into the plurality of traveling areas. That is, as illustrated in FIG. 13, in a case where the entire area is divided into a first traveling area Z1 and a second traveling area Z2, when the traveling in the first traveling area Z1 ends, the traveling in the second traveling area Z2 starts. In this case, after the homing to the docking device 200 is performed according to the position of the docking device 200, the moving robot may move to other traveling areas. However, the moving robot can move to other traveling areas without performing the homing.

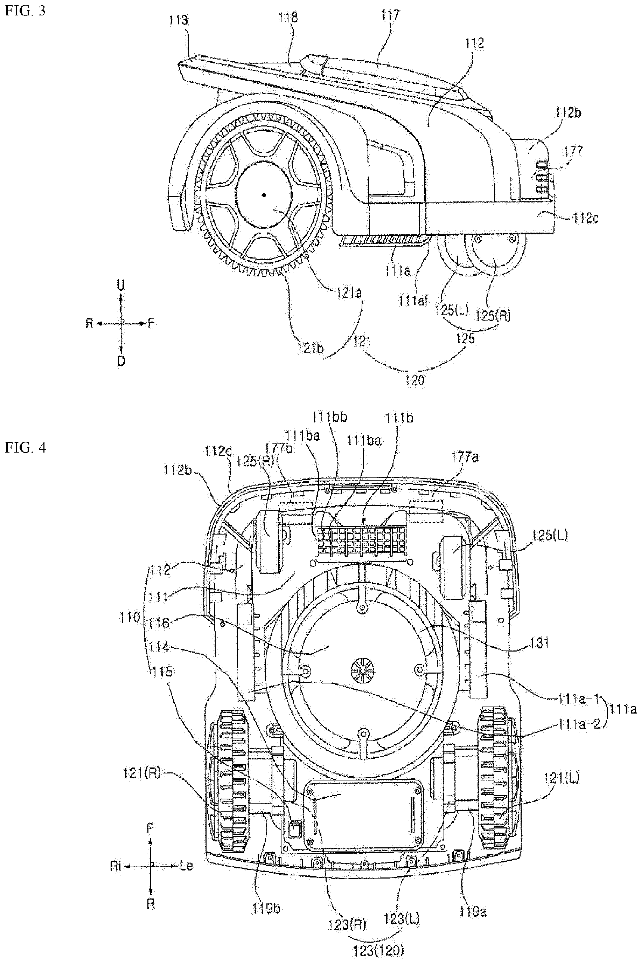

In this way, when the entire region is divided into the plurality of traveling areas, the division can be performed according to the threshold area. In FIG. 3, the traveling area Z1 is divided into an area having a relatively smooth shape, but the second traveling area Z2 is divided into an area which include a depression or the protrusion area Zs forming a depression.

As described above, the size of the protrusion area Zs may be divided into the area having an area smaller than the threshold area. When the pattern traveling mode with respect to the first traveling area Z1 ends, the controller 190 starts the pattern traveling mode with respect to the second traveling area Z2.

In this case, representatively, the pattern is the zigzag mode.

When the traveling in the second traveling area Z2 starts, as described above, the subsequent traveling mode is performed through the change of the major axis Sr in the protrusion area Zs and the traveling impossible determination at the vertex, and thus, it is possible to search for the non-traveling area Zu.

## Claims

1. A moving robot comprising:
a body which forms an appearance;
a traveler which moves the body;
a boundary signal detector which detects a boundary signal generated in a boundary area of a traveling area; and
a controller which controls pattern traveling in the traveler, reads the boundary signal during the pattern traveling to determine whether or not a situation is a traveling impossible situation, and searches for whether or not there is a non-traveling area according to a determination result to control the traveler.

2. The moving robot of claim 1, wherein the controller controls the traveler so that the moving robot performs pattern traveling in a zigzag mode in which the moving robot alternately travels a major axis and a minor axis.

3. The moving robot of claim 2, wherein the controller determines whether or not a length of the major axis is reduced to set the length of the major axis to a reduced length, and determines whether or not a situation is the traveling impossible situation at a vertex while the pattern traveling is performed along the set major axis.

4. The moving robot of claim 3, wherein the controller determines the traveling impossible situation by determining there is a non-traveling minor axis at the vertex or determining there is a non-traveling major axis at the vertex.

5. The moving robot of claim 3, wherein the controller determines the traveling impossible situation according to whether or not there is an obstacle and there is an island at the vertex.

6. The moving robot of claim 3, wherein when the situation is determined as the traveling impossible situation, the controller searches for whether or not there is the non-traveling area following the boundary area from the vertex.

7. The moving robot of claim 6, wherein the boundary area is defined by a boundary wire which is disposed in the boundary area of the traveling area.

8. The moving robot of claim 7, wherein when the moving robot follows the boundary area, the controller determines whether or not a new major axis is detected while following the boundary wire of the area which has already been traveled from the vertex.

9. The moving robot of claim 8, wherein the controller sets a length of a major axis of a pattern according to a length of the new detected major axis, and performs pattern traveling of the non-traveling area.

10. The moving robot of claim 2, wherein the controller divides a traveling area into a first traveling area and a second traveling area and travels the second traveling area after traveling the first traveling area.

11. The moving robot of claim 10, wherein the first traveling area or the second traveling area includes a depression or a protrusion so that the major axis is changed.

12. A moving robot system comprising:
a boundary wire which defines a traveling area; and
a moving robot which includes a body which forms an appearance, a traveler which moves the body, a boundary signal detector which detects a boundary signal generated in a boundary area of a traveling area, and a controller which controls pattern traveling in the traveler, reads the boundary signal during the pattern traveling to determine whether or not a situation is a traveling impossible situation, and searches for whether or not there is a non-traveling area according to a determination result to control the traveler,
wherein when there is the non-traveling area, the controller controls the traveler so that the moving robot continues to travel the non-traveling area.

13. The moving robot system of claim 12, wherein the controller controls the traveler so that the moving robot performs pattern traveling in a zigzag mode in which the moving robot alternately travels a major axis and a minor axis.

14. The moving robot system of claim 13, wherein the controller determines whether or not a length of the major axis is reduced to set the length of the major axis to a reduced length, and determines whether or not a situation is the traveling impossible situation at a vertex while the pattern traveling is performed along the set major axis.

15. The moving robot system of claim 12, wherein the controller determines the traveling impossible situation by determining there is a non-traveling minor axis at the vertex or determining there is a non-traveling major axis at the vertex.

16. The moving robot system of claim 15, wherein the controller continuously performs traveling in the non-traveling area at the vertex.

17. The moving robot system of claim 16, wherein the controller moves following the boundary wire from the vertex to the non-traveling area.

18. The moving robot system of claim 12, further comprising:
a docking device to which the moving robot is docked to be charged,
wherein one end of the boundary area is disposed to be adjacent to the docking device.

19. The moving robot system of claim 18, wherein the docking device further includes a fist wire terminal and a second wire terminal which are connected to a power source, and
one end of the boundary wire is connected to the first wire terminal and the other end of the boundary wire is connected to the second wire terminal.
